# EUROPÄISCHE PATENTSCHRIFT

(11) **EP 3 663 798 B1**
(45) Veröffentlichungstag und Bekanntmachung des Hinweises auf die Patenterteilung: **27.01.2021**
(21) Anmeldenummer: 18210917.3
(22) Anmeldetag: 07.12.2018
(51) Int. Cl.: G01S 17/10, G01S 17/42, G01S 7/4861, G01S 7/4865

(54) **OPTOELEKTRONISCHER SENSOR UND VERFAHREN ZUR ERFASSUNG UND ABSTANDSBESTIMMUNG VON OBJEKTEN**
OPTOELECTRONIC SENSOR AND METHOD FOR RECORDING AND DETERMINING THE DISTANCE OF AN OBJECT
DÉTECTEUR OPTOÉLECTRONIQUE ET PROCÉDÉ DE DÉTECTION ET DE DÉTERMINATION DE DISTANCE DES OBJETS

(43) Veröffentlichungstag der Anmeldung: 10.06.2020
(73) Patentinhaber: SICK AG, 79183 Waldkirch (DE)
(72) Erfinder: Jachmann, Fabian, 79102 Freiburg (DE)

(56) Entgegenhaltungen:
- EP-A1- 0 283 538
- EP-A1- 3 059 608
- US-A1- 2016 116 575

## Beschreibung

Die Erfindung betrifft einen optoelektronischen Sensor und ein Verfahren zur Erfassung und Abstandsbestimmung von Objekten in einem Überwachungsbereich nach dem Oberbegriff von Anspruch 1 beziehungsweise 13.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Durch Bestimmung der Lichtlaufzeit kann dabei der Abstand zu dem angetasteten Objekt gemessen werden.

Um den Messbereich zu erweitern, kann der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst. In den meisten Laserscannern wird die Abtastbewegung durch einen Drehspiegel erreicht. Es ist aber auch bekannt, stattdessen den gesamten Messkopf mit Lichtsendern und Lichtempfängern rotieren zu lassen, wie dies beispielsweise in DE 197 57 849 B4 beschrieben ist.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten meist pulsbasiert.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

Die Abstandsmessung in einem Lichtlaufzeitverfahren erfolgt durch ein Pulsverfahren oder alternativ eine Phasenmessung. Innerhalb der Pulsverfahren wird weiter unterschieden zwischen Einzelpulsverfahren, die aus jedem wieder empfangenen Sendepuls eine Entfernung messen, und sogenannten Pulsmittelungsverfahren, in denen eine Vielzahl von Einzelmessungen gemeinsam ausgewertet wird. Ein solches Pulsmittelungsverfahren wird beispielsweise in der EP 1 972 961 A1 vorgestellt.

Die EP 2 469 296 A1 befasst sich mit einer Weiterentwicklung eines Pulsmittelungsverfahren für Laserscanner. Dabei entsteht nämlich das Problem, dass die Einzelmessungen durch die Scanbewegung nicht in die gleiche Winkelrichtung erfolgen, und die EP 2 469 296 A1 gibt verschiedene Möglichkeiten an, die Einzelmessungen auf vorteilhafte Weise zu einem Abstandswert zusammenzufassen und einem Scanwinkel zuzuordnen.

Bei den genannten Pulsmittelungsverfahren werden nicht direkt Empfangspulse aufaddiert. Vielmehr ist jeweils im analogen Empfangspfad ein Filter vorgesehen, beispielsweise ein Bandpassfilter, welches aus dem Empfangspuls eine Schwingung erzeugt. Diese Schwingung wird anstelle des eigentlichen Empfangspulses in einem Histogramm akkumuliert und dann das Histogramm ausgewertet. Das führt zu einer stabileren Auswertung mit gleichmäßigeren Signalformen. Gegenüber der Auswertung des Empfangspulses selbst reduziert sich aber die Empfindlichkeit.

Aus der US 2016/0116575 A1 ist eine Empfangsschaltung für einen Laserentfernungsmesser bekannt. Die Empfangsschaltung umfasst eine erste Teilschaltung für Signale eines pulsbasierten Lichtlaufzeitverfahrens und eine zweite Teilschaltung für Signale eines phasenbasierten Lichtlaufzeitverfahrens, und zwischen den beiden Teilschaltungen kann umgeschaltet werden. In der ersten Teilschaltung ist ein Widerstand parallel zu einem Transimpedanzverstärker geschaltet. Die zweite Teilschaltung weist einen schmalbandig angepassten Schwingkreis auf.

Die EP 3 059 608 A1 offenbart einen Laserscanner mit zwei Empfangspfaden. In einem Vorverarbeitungspfad wird aus einem Empfangspuls ein Schwingungssignal zur weiteren Verarbeitung erzeugt während in einer Empfangspegelbestimmungseinheit die Stromaufnahme des Lichtempfängers gemittelt über eine Messperiode gemessen wird.

Die EP 0 283 538 A1 offenbart einen optischen TOF-Sensor mit Empfangsschaltungen, die jeweils eine Fotodiode in Reihe mit einem gedämpften Schwingkreis, bestehend aus einem Widerstand, einer Induktivität und einem Kondensator in Parallelschaltung, enthalten.

Es ist daher Aufgabe der Erfindung, eine verbesserte Auswertung des Empfangssignals für eine Abstandsmessung anzugeben.

Diese Aufgabe wird durch einen optoelektronischen Sensor und ein Verfahren zur Erfassung und Abstandsbestimmung von Objekten in einem Überwachungsbereich nach Anspruch 1 beziehungsweise 13 gelöst. Der Sensor ist ein entfernungsmessender Sensor, der ein Lichtsignal aussendet, wieder empfängt und aus der Lichtlaufzeit den Abstand zu dem Objekt bestimmt, welches das Lichtsignal zurückgeworfen hat. Dabei wird erfindungsgemäß ein pulsbasiertes Lichtlaufzeitverfahren eingesetzt, das Lichtsignal weist dann einen Lichtpuls auf. Dem Lichtempfänger ist eine Empfängerschaltung zugeordnet, die das Empfangssignal vor der Auswertung aufbereitet. In einem ersten Empfangspfad der Empfängerschaltung regt das Empfangssignal eine Schwingung an, dieses Schwingungssignal wird vorzugsweise zunächst verstärkt und dann an die Steuer- und Auswertungseinheit übergeben. Bei einem Pulsverfahren werden demnach keine Empfangspulse ausgewertet, sondern die von den Empfangspulsen mittels des ersten Empfangspfades erzeugten Schwingungssignale. Die Empfängerschaltung ist bevorzugt analog, die Steuer- und Auswertungseinheit digital ausgebildet.

Die Erfindung geht von dem Grundgedanken aus, eine Wahlmöglichkeit zwischen der Auswertung des Schwingungssignals und einer alternativen Auswertung anzubieten. Dazu weist die Empfängerschaltung einen zweiten Empfangspfad für ein direktes Auslesen an. Darin wird keine Schwingung erzeugt, sondern der Empfangspuls selbst an die Auswertung übergeben. Dabei ist zu beachten, dass es technisch unmöglich ist, den Empfangspuls in Reinform auszulesen, ein gewisses An- und Ausschwingen ist aufgrund parasitärer Effekte unvermeidlich. Das direkt ausgelesene Empfangssignal weist aber jedenfalls einen wesentlich stärkeren Hauptpeak auf, und das Ausschwingen klingt schnell ab. Es gibt in dem zweiten Empfangspfad anders als im ersten Empfangspfad keine Komponenten, um künstlich eine Schwingung zu erzeugen. Mittels eines Umschaltelements wird der erste Empfangspfad oder der zweite Empfangspfad aktiviert, d.h. zwischen den beiden Modi umgeschaltet. Die beiden Empfangspfade dürfen sich Leitungen und Komponenten teilen, wobei beispielsweise das Umschaltelement je nach Modus bestimmte Komponenten überbrückt oder hinzuschaltet.

Die Erfindung hat den Vorteil, dass über den ersten Modus oder Empfangspfad eine besonders hohe Genauigkeit, über den zweiten Modus eine besonders hohe Empfindlichkeit erreicht wird. Der Sensor kann für verschiedene Anforderungen auf einen bestimmten Modus konfiguriert werden oder die Modi alternieren. Somit sind in ein und demselben Sensor die Vorteile beider Modi kombiniert.

Der erste Empfangspfad weist vorzugsweise ein Schwingungsfilter auf. Lichtsignale sind stets unipolar. Indem das empfangene Lichtsignal das Schwingungsfilter anstößt, wird dieses unipolare Empfangssignal in eine bipolare gedämpfte Schwingung umgesetzt. In dem Schwingungssignal lässt sich beispielsweise durch nachgelagerte digitale Signalverarbeitung ein Empfangszeitpunkt anhand eines Nulldurchgangs bestimmen. Dieser Nulldurchgang hängt praktisch nicht von der Signalstärke ab und ist daher besonders robust für eine Abstandsbestimmung verwendbar. Das Schwingungsfilter ist beispielsweise ein Bandpassfilter oder ein Differenzierglied, vorzugsweise ein Schwingkreis. Damit ist gemeint, dass gezielt Schaltelemente mit Induktivität und Kapazität als Schwingkreis vorgesehen sind, nicht lediglich unvermeidliche parasitäre Effekte.

Der zweite Empfangspfad weist bevorzugt einen Shuntwiderstand auf. Dessen Widerstandswert liegt vorzugsweise in der Größenordnung des Eingangswiderstands des weiteren Empfangspfads, also insbesondere eines nachgeordneten Verstärkers. Bei Lichteinfall auf den Lichtempfänger fließt ein Strom durch den Shuntwiderstand, dies erzeugt einen Spannungsabfall, über den das Lichtsignal direkt, also ohne künstlich eine Schwingung anzustoßen, gemessen wird. Wie schon mehrfach erwähnt, ist ein gewisses Ein- und Ausschwingen aufgrund parasitärer Effekte auch mit einem Shuntwiderstand nicht zu verhindern.

Shuntwiderstand und Schwingungsfilter sind bevorzugt in Reihe geschaltet, und der Shuntwiderstand ist mittels des Umschaltelements wahlweise überbrückbar oder nicht. In dieser Ausführungsform sind die beiden Empfangspfade nicht vollständig separiert, sondern weisen eine Teilüberlappung auf. Wird der Shuntwiderstand im ersten Modus überbrückt, so ist der erste Empfangspfad aktiv, in dem das Schwingungsfilter angestoßen wird. Im zweiten Modus ist der Shuntwiderstand nicht überbrückt, so dass ein entsprechender Spannungsabfall erzeugt und direkt gemessen wird. Das Umschaltelement ist beispielsweise ein Bypass, der wahlweise mit einem Transistor geschlossen oder geöffnet wird.

Erster Empfangspfad und zweiter Empfangspfad weisen vorzugsweise zueinander parallele Teilzweige auf, aus denen mittels des Umschaltelements jeweils ein Teilzweig mit dem Lichtempfänger verbindbar ist. Das Umschaltelement wählt hier je nach Modus einen der Teilzweige und damit den ersten oder zweiten Empfangspfad auf, womit insbesondere entweder der Schwingkreis oder der Shuntwiderstand angeschlossen wird.

Die Steuer- und Auswertungseinheit ist bevorzugt dafür ausgebildet, zu einem jeweils bestimmten Wert für den Abstand eine Modusinformation mit dem zugehörigen Zustand des Umschaltelements zu speichern. Die Modusinformation ist eine Art Flag, welches kennzeichnet, ob ein Messwert im ersten Modus oder im zweiten Modus gewonnen wurde. Dadurch kann im Nachhinein eine Auswahl getroffen werden, bei der sich eine Auswertung mit besonderen Genauigkeitsanforderungen eher an den im ersten Modus und eine Auswertung mit besonderen Empfindlichkeitsanforderungen eher an den im zweiten Modus erfassten Messwerten orientiert. Die Modusinformation lässt sich auch als zusätzliche Bewertung nutzen. Beispielsweise ist bekannt, dass ein im zweiten Modus gewonnener Messwert etwas weniger genau ist und womöglich einer anderen oder überhaupt einer Farb- beziehungsweise Schwarz-Weiß-Korrektur bedarf.

Die Steuer- und Auswertungseinheit ist bevorzugt dafür ausgebildet, eine Vielzahl von Sendelichtsignalen nacheinander auszusenden, Informationen über die jeweiligen remittierten oder reflektierten Lichtsignale in einem Histogramm zu akkumulieren und das Histogramm auszuwerten, um die Lichtlaufzeit zu bestimmen. Damit ergibt sich insbesondere ein Pulsmittelungsverfahren wie einleitend kurz vorgestellt, wobei zu weiteren Details auf die dort genannte Patentliteratur verwiesen wird. Es ergibt sich nicht aus jeder Einzelmessung bereits ein Abstandswert, vielmehr werden die Ergebnisse einer Vielzahl von Einzelmessungen gesammelt und gemeinsam statistisch ausgewertet. Die Statistik führt zu einem verbesserten Signal-Rausch-Verhältnis und dadurch zu größerer Genauigkeit beziehungsweise Reichweite.

Die Steuer- und Auswertungseinheit ist bevorzugt dafür ausgebildet, das Umschaltelement mindestens einmal zwischen den wiederholt ausgesandten Sendelichtsignalen für die Bestimmung eines Werts für den Abstand umzuschalten. Hierbei erfolgt mindestens ein Wechsel des Modus zwischen Einzelmessungen, die gemeinsam für einen Abstandswert ausgewertet werden. Das ergibt insgesamt eine Mischform zwischen den beiden Modi, in der über die Quotelung die Vor- und Nachteile gewichtet werden können. Dabei sind sehr viele Umschaltmuster denkbar. Im einfachsten Fall wird die erste Hälfte der Einzelmessungen im einen Modus A und die andere Hälfte im zweiten Modus B durchgeführt. Es gibt aber auch die Möglichkeit, die Einzelmessungen durch häufigeres Umschalten sozusagen ineinander zu verschachteln, etwa gemäß ABABABAB oder ABBAABBA, oder mit ungleicher Häufigkeit etwa AABAAB. Das Verschachteln hat den Vorteil, dass die Messverhältnisse in veränderlichen Umgebungen vergleichbar bleiben. Insbesondere bei einem Laserscanner, auf den sogleich näher eingegangen wird, gibt es durch die Scanbewegung ständige Dynamik, in der ein Verschachteln der Modus über die Einzelmessungen sinnvoll sein kann.

Der Sensor ist bevorzugt als Laserscanner mit einer beweglichen Ablenkeinheit zur periodischen Ablenkung der Sendelichtsignale in den Überwachungsbereich ausgebildet. Das ermöglicht eine Flächenüberwachung mit einem großen erfassten Überwachungsbereich. Ein Laserscanner weist bevorzugt eine Winkelmesseinheit zur Erzeugung von Winkelpositionssignalen in Abhängigkeit von einer Winkelstellung der Ablenkeinheit auf, um Objektpositionen oder Konturen zweidimensional zu erfassen. Eine periodische Ablenkung in einer weiteren Achse ermöglicht sogar eine 3D-Erfassung.

Die Steuer- und Auswertungseinheit ist bevorzugt dafür ausgebildet, das Umschaltelement zwischen zwei Perioden der periodischen Ablenkung umzuschalten. Das lässt sich auch so ausdrücken, dass jeweils ein ganzer Scan, also eine Erfassung des Überwachungsbereichs, im selben Modus erfolgt und zwischen den Scans umgeschaltet wird. Dabei sind Umschaltmuster mit gleichmäßigem Alternieren wie ABAB, mit Bevorzugen eines Modus wie AABAAB und sonstige Umschaltungen denkbar.

Die Steuer- und Auswertungseinheit ist bevorzugt dafür ausgebildet, das Umschaltelement zwischen zwei Bestimmungen eines Abstands umzuschalten. Diese Umschaltung erfolgt nicht erst nach einem Scan, sondern bereits nach einer jeweiligen Messung eines Abstands, also insbesondere nach einem oder mehreren Winkelschritten. Diese Umschaltvariante ist aber auch nicht auf Laserscanner beschränkt. Der Modus muss nicht nach jeder Messung umgeschaltet werden, sondern kann über mehrere Messungen derselbe bleiben. Speziell bei einem Pulsmittelungsverfahren bedeutet das Umschalten von Messung zu Messung eine Umschaltung vor dem Akkumulieren des nächsten Histogramms, nicht wie einige Absätze zuvor zwischen Einzelmessungen innerhalb des Ackumulierens eines Histogramms, wobei beides miteinander kombinierbar ist. Erneut ist eine Vielzahl von Umschaltmustern vorstellbar, etwa ABAB für eine doppelte Messung mit beiden Modi bei halbierter Messwiederholfrequenz, oder im Falle des Laserscanners Winkelauflösung, aber auch AABAAB mit höherer Quotelung für einen Modus oder kompliziertere Sequenzen wie AABABAABAB und weitere.

Als weitere alternative zu automatischen Umschaltungen, insbesondere wie beispielhaft angegeben und allgemein nach einer vorgegebenen oder vorgebbaren Sequenz mit Permutationen von n^{∗}A und m^{∗}B, kann ein Modus auch für eine längere Betriebsdauer gewählt werden, sei es also Konfiguration, ab Werk oder auf Befehl einer übergeordneten Steuerung. Als nochmals weitere Alternative kann der Modus von Umgebungsbedingungen oder Messungen abhängig gemacht werden, wie einem Objektabstand, einer Objektremission oder ähnlichem, wobei dies wiederum auf Annahmen, Konfigurationen oder eigenen Messwerten basieren kann.

Der Sensor weist bevorzugt einen Sicherheitsausgang auf, wobei die Steuer- und Auswertungseinheit dafür ausgebildet ist, unzulässige Eingriffe in Schutzfelder innerhalb des Überwachungsbereichs zu erkennen und daraufhin ein sicherheitsgerichtetes Abschaltsignal an dem Sicherheitsausgang auszugeben. Damit kann der Sensor in sicherheitstechnischen Anwendungen eingesetzt werden. Beispiele sind Sicherheitsscanner oder sichere entfernungsmessende Lichtgitter.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines optoelektronischen Sensors in einer Ausführungsform als Entfernungstaster;
- Fig. 2: eine schematische Schnittdarstellung eines optoelektronischen Sensors in einer Ausführungsform als Laserscanner;
- Fig. 3: eine Empfängerschaltung eines optoelektronischen Sensors, die ein Schwingungsfilter in Form eines Schwingkreises aufweist;
- Fig. 4: eine Empfängerschaltung eines optoelektronischen Sensors, die einen Shuntwiderstand zum direkten Auslesen des Empfangssignals aufweist;
- Fig. 5: beispielhafte zeitliche Verläufe der Intensität eines Empfangssignals in einer Empfängerschaltung mit Schwingungsfilter nach Figur 3 (durchgezogene Linie) und mit Shuntwiderstand nach Figur 4 (gestrichelte Linie);
- Fig. 6: eine Empfängerschaltung eines optoelektronischen Sensors mit Shuntwiderstand und Schwingkreis in Reihenschaltung sowie einem Schalter zum Überbrücken des Shuntwiderstands; und
- Fig. 7: eine Empfängerschaltung eines optoelektronischen Sensors mit Shuntwiderstand und Schwingkreis in parallel geschalteten Teilzweigen sowie einem Schalter zum wahlweisen Verbinden eines der beiden Teilzweige.

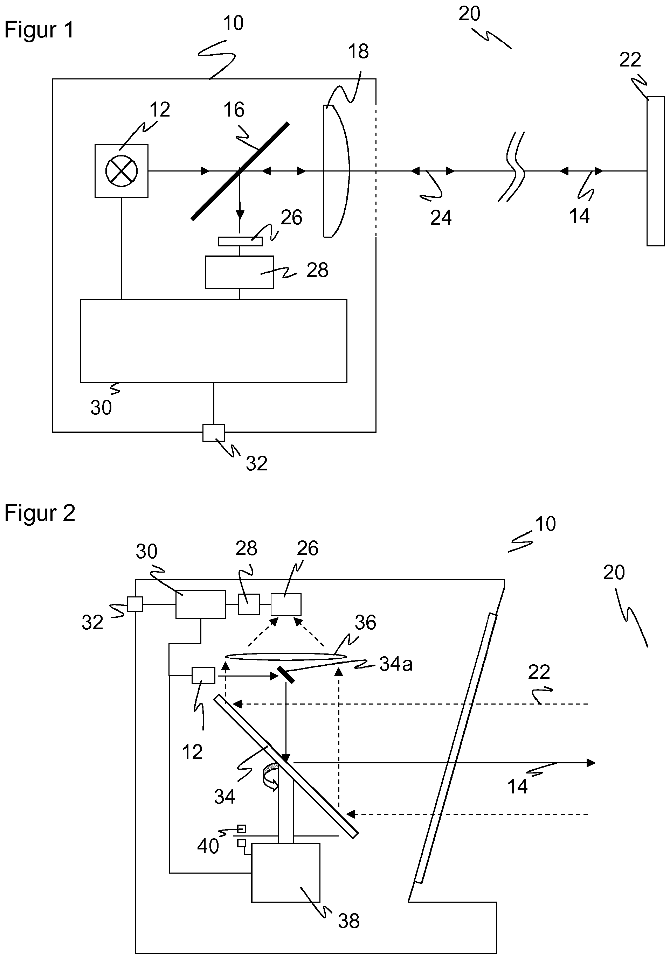

Figur 1 zeigt ein Blockschaltbild eines optoelektronischen Sensors 10 in einer Ausführungsform als Entfernungstaster. Ein Lichtsender 12 ist so ausgerichtet, dass sein Sendelicht 14 einen Teilerspiegel 16 transmittiert und anschließend über eine Optik 18 in einen Überwachungsbereich 20 gelangt. Dort wird das Sendelicht 14, wenn sich ein Objekt 22 im Strahlengang befindet, an diesem Objekt 22 reflektiert oder remittiert und kehrt als remittiertes Licht 24 erneut durch die Optik 18 zu dem Teilerspiegel 16 zurück, wo es in einem Lichtempfänger26 gespiegelt und dort erfasst wird. Die Teilerspiegelanordnung ist rein beispielhaft zu verstehen, die Erfindung umfasst ebenso andere Anordnungen ohne Teilerspiegel wie beispielsweise Doppelaugen.

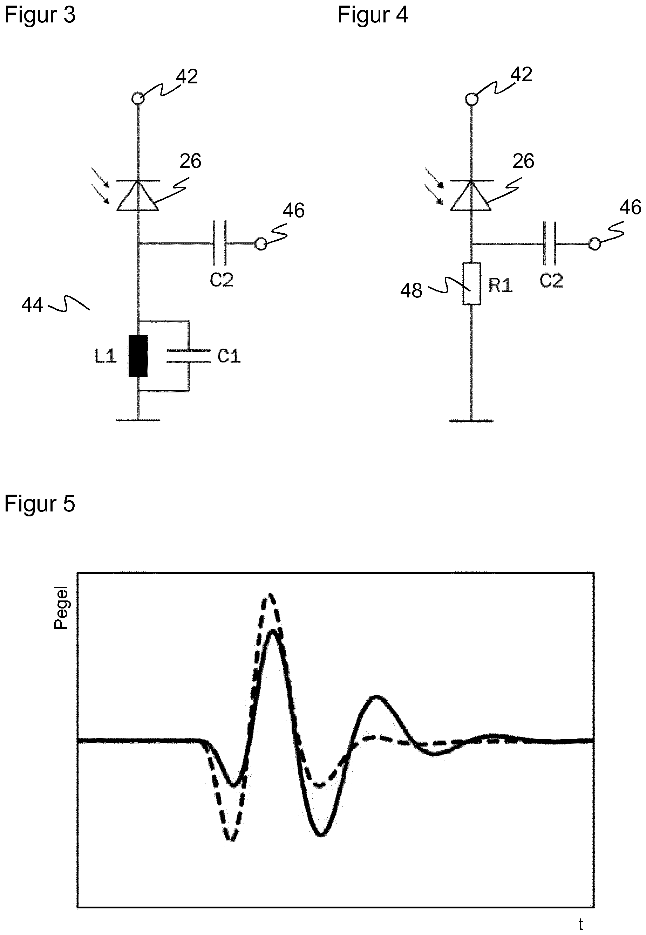

Der Lichtempfänger 26 erzeugt ein Empfangssignal, das über eine Empfängerschaltung 28 einer Steuer- und Auswertungseinheit 30 zugeführt wird. Vorzugsweise ist die später anhand der Figuren 3 bis 7 noch genauer erläuterte Empfängerschaltung 28 analog und die Steuer- und Auswertungseinheit 30 digital, beispielsweise ein FPGA (Field Programmable Gate Array). Dazu ist dann ein nicht dargestellter A/D-Wandler am Ende der Empfängerschaltung 28 vorgesehen, der auch lediglich als Komparator beziehungsweise Binarisierer oder für eine Mehrschwellenabtastung gemäß EP 2 942 645 A1 ausgebildet sein kann.

Die Steuer- und Auswertungseinheit 30 bestimmt eine Lichtlaufzeit zwischen Aussenden von Sendelicht 14 und Empfang des remittierten Lichts 24 und daraus mit Hilfe der Lichtgeschwindigkeit einen Abstand zu dem Objekt 22. Dazu wird das Sendelicht für ein Einzelpuls- oder ein Pulsmittelungsverfahren mit einem Sendelichtpuls moduliert. Die Messergebnisse werden an einem Ausgang 32 bereitgestellt, je nach Ausführungsform als Abstandswerte, als binäres Objektfeststellungssignal je nach Anwesenheit oder Abwesenheit eines Objekts 22 in einem bestimmten Abstandsbereich, oder als Rohdaten.

Figur 2 zeigt eine schematische Schnittdarstellung einer weiteren Ausführungsform des optoelektronischen Sensors 10 als Laserscanner. Ergänzend wird auf die Erläuterung zu Figur 1 verwiesen, wobei gleiche oder einander entsprechende Merkmale jeweils mit gleichem Bezugszeichen gekennzeichnet sind. Wiederum erzeugt ein Lichtsender 12, beispielsweise mit einer Laserlichtquelle, mit Hilfe einer nicht gezeigten Sendeoptik einen Sendelichtstrahl 14 mit Sendelichtpulsen. Der Sendelichtstrahl 14 wird mittels einer starren Ablenkeinheit 34a und einer beweglichen Ablenkeinheit 34 in den Überwachungsbereich 20 ausgesandt und dort von einem gegebenenfalls vorhandenen Objekt remittiert. Das remittierte Licht 24 gelangt wieder zu dem Laserscanner zurück und wird dort über die bewegliche Ablenkeinheit 34 mittels einer Empfangsoptik 36 von dem Lichtempfänger 26 detektiert, beispielsweise einer Photodiode oder für höhere Empfindlichkeit einer Lawinenphotodiode (APD).

Die bewegliche Ablenkeinheit 34 wird von einem Motor 38 in eine kontinuierliche Drehbewegung mit einer Scanfrequenz versetzt. Dadurch tastet der Sendelichtstrahl 14 während jeder Scanperiode, also einer vollständigen Umdrehung bei der Scanfrequenz, eine Ebene ab. An der beweglichen Ablenkeinheit 34 ist eine Winkelmesseinheit 40 angeordnet, um die jeweilige Winkelstellung der beweglichen Ablenkeinheit 34 zu erfassen. Die Winkelmesseinheit 40 wird hier beispielhaft von einer Strichscheibe als Winkelmaßverkörperung und einer Gabellichtschranke als Abtastung gebildet.

Eine Steuer- und Auswertungseinheit 30 ist mit dem Lichtsender 12, über eine Empfängerschaltung 28 mit dem Lichtempfänger 26, sowie mit dem Motor 38 und der Winkelmesseinheit 40 verbunden. Die Steuer- und Auswertungseinheit 30 misst mittels Lichtlaufzeitverfahrens den Abstand des angetasteten Objekts. Dabei ist die jeweilige Winkelstellung, unter welcher dabei der Sendelichtstrahl 14 ausgesandt wurde, der Steuer- und Auswertungseinheit 30 von der Winkelmesseinheit 40 bekannt. Somit stehen nach jeder Scanperiode über den Winkel und die Entfernung zweidimensionale Polarkoordinaten aller Objektpunkte in dem Überwachungsbereich 20 zur Verfügung, die an dem Ausgang 32 bereitgestellt werden können. Bei Anwendungen in der Sicherheitstechnik kann der Ausgang 32 sicher ausgebildet sein (OSSD, Output Signal Switching Device), und die Steuer- und Auswertungseinheit 30 wertet zusätzlich aus, ob ein Schutzfeld verletzt ist und an dem Ausgang 32 ein sicherheitsgerichtetes Abschaltsignal ausgegeben werden muss.

Der optische und konstruktive Aufbau dieses Laserscanners ist nur als Beispiel zu verstehen, es sind auch andere Laserscanner beispielsweise mit drehendem Messkopf anstelle eines Drehspiegels als bewegliche Ablenkeinheit 34 möglich.

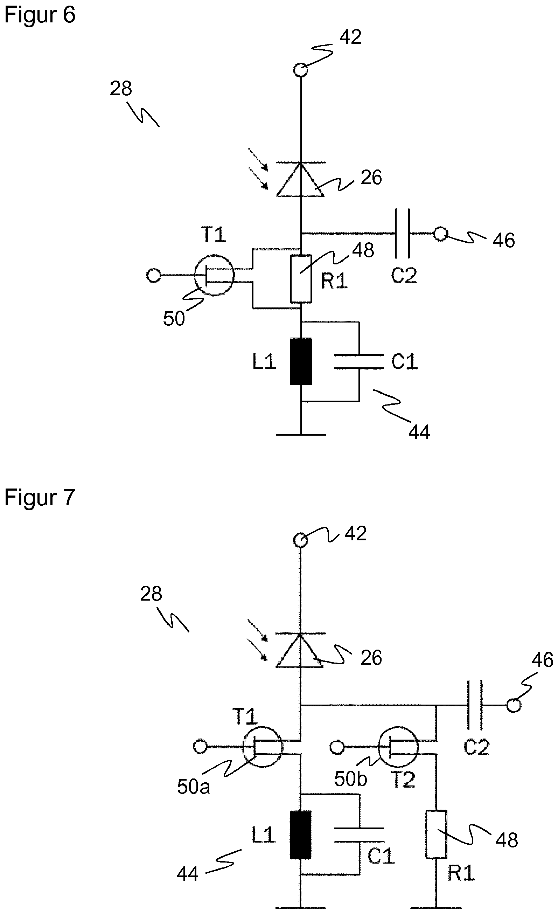

Die Figuren 3 und 4 zeigen zwei verschiedene Ausgestaltungen eines analogen Empfangspfades, die ihre jeweiligen Vor- und Nachteile haben und die erfindungsgemäß in einer Empfängerschaltung 28 zusammengefasst werden, was dann später unter Bezugnahme auf die Figuren 6 und 7 beschrieben wird. Figur 5 zeigt eine schematische Darstellung der jeweiligen Empfangssignale, also einen jeweiligen zeitabhängigen Intensitätsverlauf für Figur 3 mit durchgezogener und für Figur 4 mit gestrichelter Linie, wenn ein Lichtpuls auf den Lichtempfänger 26 trifft.

In Figur 3 ist der Lichtempfänger 26, hier als APD mit Hochspannungsversorgung 42 oder alternativ als einfache Photodiode, mit einem Schwingkreis 44 mit Induktivität L1 und Kapazität C1 verbunden. Der bei Empfang eines Lichtpulses in dem Lichtempfänger 26 erzeugte Pulsstrom regt den Schwingkreis 44 an. Dementsprechend wird an nachgelagerte Schaltelemente, insbesondere einen Verstärker und A/D-Wandler, am Verbindungspunkt 46 in Richtung Steuer- und Auswertungseinheit 30 das in Figur 5 mit durchgezogener Linie dargestellte Schwingungssignal übergeben. Der Empfangszeitpunkt kann dort beispielsweise an einem Nulldurchgang festgemacht werden. Ein Sensor 10 mit Schwingkreis 44 ist sehr schmalbandig und robust gegenüber Rauschquellen, insbesondere Schrotrauschen in der APD des Lichtempfängers 26, das durch hohes Fremdlicht verursacht wird. Zudem sorgt der Schwingkreis 44 für eine gleichmäßigere Signalform unabhängig von der Form oder Amplitude des empfangenen Lichtpulses. Dadurch spielt die sogenannte Farb- oder Schwarzweißverschiebung, die eine Pegelabhängigkeit des gemessenen Abstandswerts betrifft, eine untergeordnete Rolle.

In Figur 4 ist der Grundaufbau der gleiche wie in Figur 3. Der Pulsstrom regt hier aber keinen Schwingkreis 44 an, sondern wird mittels eines Shuntwiderstands 48 abgegriffen. Das wird als direktes Auslesen bezeichnet, weil die Pulsform möglichst getreu abgebildet wird. Wie in Figur 5 an der gestrichelten Linie zu erkennen, wird der direkt ausgelesene Puls von einem negativen Anschwingen und einem Ausschwingen begleitet. Das liegt an parasitären Effekten und lässt sich nicht vermeiden, es ist hier aber kein Schwingkreis 44 als eigenes Schaltungselement vorgesehen. Das auszuwertende Signal wird viel stärker von dem ersten Hauptpeak geprägt. Allerdings ist gerade bei hohen Signalpegeln wegen der höheren Bandbreite die Form des Signalzuges deutlicher von der Übertragungsfunktion des nachgeschalteten Verstärkers beeinflusst, denn unterschiedliche Frequenzkomponenten werden leicht unterschiedlich verstärkt oder erhalten einen leicht unterschiedlichen Phasenversatz.

Mit einem Shuntwiderstand 48 gemäß Figur 4 anstelle eines Schwingkreises 44 gemäß Figur 3 wird das System deutlich empfindlicher, da mehr Signal am Anfang des Signalzuges zur Auswertung bereit steht. Die erste und zweite Halbwelle sind besonders bei scannenden Systemen entscheidend für die Laufzeitauswertung. Die späteren Signalanteile sind mit Schwingkreis 44 einigermaßen, mit Shuntwiderstand 48 schon sehr deutlich gedämpft. Zudem kommt es bei Messungen auf Objektkanten durch Mehrfachechos häufig zu Interferenzen, welche die späteren Signalanteile verfälschen, so dass diese sich weniger für eine Auswertung eignen.

Zusammenfassend ist die Ausgestaltung nach Figur 3 robuster und genauer, während die Ausgestaltung nach Figur 4 eine höhere Empfindlichkeit und Reichweite jedoch mit größerem Messfehler, Drift über Temperatur und einer gewissen Fremdlichtempfindlichkeit mit sich bringt.

Figur 6 zeigt eine Ausführungsform einer Empfängerschaltung 28, welche die beiden anhand der Figuren 3 und 4 vorgestellten Varianten kombiniert. Der Grundaufbau bleibt wiederum der gleiche wie in Figur 3. Dem Schwingkreis 44 wird aber nun der Shuntwiderstand 48 in Reihe vorgeordnet. Ist der Widerstandswert R1 des Shuntwiderstands 48 etwa so groß wie oder größer als der Eingangswiderstand der nachgeschalteten Komponenten am Verbindungspunkt 46, also insbesondere des dort angeschlossenen Verstärkers, dann ergibt sich die zu Figur 4 beschriebene breitbandige Charakteristik mit hoher Empfindlichkeit.

Parallel zu dem Shuntwiderstand 48 ist ein Transistor 50 vorgesehen, mit dem der Shuntwiderstand 48 wahlweise überbrückt oder kurzgeschlossen werden kann. Dieser Transistor 50 ist mit der Steuer- und Auswertungseinheit 30 verbunden, welche eine jeweilige Umschaltung vornimmt und dies auch als Empfindlichkeitsanpassung des Sensors 10 für den Benutzer oder eine übergeordnete Steuerung zugänglich machen kann. Ist der Shuntwiderstand 48 kurzgeschlossen, so wird bei Empfang eines Lichtpulses der Schwingkreis 44 angeregt, und es ergibt sich die zu Figur 3 beschriebene schmalbandige Charakteristik mit hoher Genauigkeit und Stabilität.

Figur 7 zeigt eine weitere Ausführungsform einer Empfängerschaltung 28, welche die beiden anhand der Figuren 3 und 4 vorgestellten Varianten kombiniert. Anders als in Figur 6 sind hier Schwingkreis 44 und Shuntwiderstand 48 parallel in jeweiligen Teilzweigen statt in Reihe geschaltet. Es sind nun zwei Transistoren 50a-b vorgesehen, die so angesteuert werden, dass jeweils ein Transistor 50a- offen und der andere Transistor 50b-a geschlossen ist. Dadurch ergeben sich effektiv die Schaltungen aus Figur 3 und 4.

Mit einer umschaltbaren kombinierten Empfängerschaltung 28 bietet der Sensor 10 die Auswahl zwischen den beiden beschriebenen Modi. Diese Auswahl kann am Gerät einmalig oder für eine längere Betriebsdauer getroffen werden, beispielsweise durch Konfiguration je nach Anforderung der kommenden Anwendung oder schon durch Werkseinstellung.

Es sind aber auch dynamische, von der Steuer- und Auswertungseinheit 30 oder einer übergeordneten Steuerung veranlasste Umschaltungen vorstellbar. Wird der eine Modus, beispielsweise derjenige nach Figur 3, mit A bezeichnet und der andere nach Figur 4 mit B oder umgekehrt, so ergeben sich allgemein beliebige Permutationen von n^{∗}A und m^{∗}B. Die Messergebnisse können anschließend sortiert oder gemeinsam ausgewertet werden. Besonders vorteilhaft ist, wenn jeder Abstandswert mit einem Flag markiert wird, welches sich die zugehörige Einstellung merkt. Das kann dann später bei der Messdatenauswertung berücksichtigt werden. Beispielsweise wird bezüglich Messgenauigkeit die Umschaltung entsprechend Figur 3 stärker gewichtet. Wenn es hingegen darum geht, weit entfernte oder dunkle Objekte 22 zu erfassen, die aufgrund der geringen Signalstärke nur mit hoher Empfindlichkeit sichtbar sind, wird eher auf Messwerte bei Umschaltung entsprechend Figur 4 zurückgegriffen.

In einem Laserscanner ist die Umschaltung sowohl innerhalb eines Scans als auch zwischen verschiedenen Scans vorstellbar. Bei gleicher Einstellung für einen ganzen Scan arbeitet der Laserscanner entsprechend besonders genau oder besonders empfindlich. Bei einem Wechsel innerhalb eines Scans, sozusagen "von Schuss zu Schuss" ergeben sich ineinander verschachtelte Winkelraster. Es wird für beide Fälle nochmals auf die Möglichkeit unterschiedlicher Musteraus Permutationen von n^{∗}A und m^{∗}B hingewiesen, beispielsweise ABAB, AABAAB, ABBAABBA etc. Eine Umschaltung kann auch bei festgelegten Scanwinkeln, zu festgelegten Zeitpunkten oder nach festgelegten Zeitintervallen erfolgen.

Bei einem Pulsmittelungsverfahren ist auch eine Umschaltung während des Sammelns von Einzelmessungen denkbar. Solange eine vollständige Sequenz, aus der dann ein Abstandsmesswert gewonnen wird, bei jeweils gleicher Einstellung aufgenommen und erst danach umgeschaltet wird, unterscheidet sich das nicht von dem beschriebenen Vorgehen bei Einzelpulsverfahren. Die Einzelmessungen können aber auch verschachtelt gewonnen und dann für die statistische Auswertung zur Gewinnung eines Abstandswert sortiert werden. Eine weitere Möglichkeit ist, schon innerhalb einer Sequenz umzuschalten und damit einen Abstandsmesswert aus gemischten Einzelmessungen mit beiden Modi zu erzeugen. Eine solche Mischeinstellung ist ein Kompromiss zwischen den beiden Ausgestaltungen nach Figur 3 und Figur 4, der durch Quotelung der Anzahl der in jeweiligen Modus beitragenden Einzelmessungen auch gewichtet werden kann. In allen diesen Fällen sind wiederum prinzipiell sämtliche Muster aus Permutationen von n^{∗}A und m^{∗}B möglich.

Schließlich ist auch denkbar, die Umschaltung nicht vorab festzulegen, sondern damit auf die Umgebungsbedingungen beziehungsweise Objekteigenschaften zu reagieren. Dabei werden die Umgebungsbedingungen, wie Fremdlicht, Objektabstand und Objektremissionsvermögen, durch Annahmen oder Vorwissen aus der Historie bisheriger Messungen bestimmt.

## Patentansprüche

1. Optoelektronischer Sensor (10) zur Erfassung und Abstandsbestimmung von Objekten (22) in einem Überwachungsbereich (20), der einen Lichtsender (12) zum Aussenden eines Sendelichtsignals (14) mit einem Lichtpuls in den Überwachungsbereich (20), einen Lichtempfänger (26) zum Erzeugen eines Empfangspulses aus dem von Objekten (22) in dem Überwachungsbereich (20) remittierten oder reflektierten Lichtsignal (24) und eine Steuer- und Auswertungseinheit (30) zum Bestimmen des Abstands des Objekts (22) mit Hilfe des Empfangspulses und eines pulsbasierten Lichtlaufzeitverfahrens aufweist, wobei dem Lichtempfänger (26) eine Empfängerschaltung (28) mit einem ersten Empfangspfad (44) nachgeordnet ist, in dem der Empfangspuls eine Schwingung anregt, wobei die Steuer- und Auswertungseinheit (22) dafür ausgebildet ist, das von einem Empfangspuls mittels des ersten Empfangspfades erzeugte Schwingungssignal auszuwerten, um einen Empfangszeitpunkt zu bestimmen, **dadurch gekennzeichnet,**
**dass** die Empfängerschaltung (28) einen zweiten Empfangspfad (48) für ein direktes Auslesen, in dem der Empfangspuls selbst, dessen Pulsform in dem zweiten Empfangspfad möglichst treu abgebildet wird, an die Steuer- und Auswertungseinheit (30) übergeben wird, sowie ein Umschaltelement (50) zur Umschaltung zwischen den beiden Empfangspfaden (44, 48) aufweist, um eine Wahlmöglichkeit zwischen der Auswertung des Schwingungssignals und des Empfangspulses selbst anzubieten, wobei sich die beiden Empfangspfade (44, 48) Leitungen und Komponenten teilen dürfen.

2. Sensor (10) nach Anspruch 1,
wobei der erste Empfangspfad ein Schwingungsfilter (44) aufweist, insbesondere einen Schwingkreis.

3. Sensor (10) nach Anspruch 1 oder 2,
wobei der zweite Empfangspfad einen Shuntwiderstand (48) aufweist.

4. Sensor (10) nach Anspruch 2 und 3,
wobei der Shuntwiderstand (48) und der Schwingungsfilter (44) in Reihe geschaltet sind und der Shuntwiderstand (48) mittels des Umschaltelements (50) wahlweise überbrückbar ist oder nicht.

5. Sensor (10) nach einem der Ansprüche 1 bis 3,
wobei erster Empfangspfad (44) und zweiter Empfangspfad (48) zueinander parallele Teilzweige aufweisen, aus denen mittels des Umschaltelements (50a-b) jeweils ein Teilzweig mit dem Lichtempfänger (26) verbindbar ist.

6. Sensor (10) nach einem der vorhergehenden Ansprüche,
wobei die Steuer- und Auswertungseinheit (30) dafür ausgebildet ist, zu einem jeweils bestimmten Wert für den Abstand eine Modusinformation mit dem zugehörigen Zustand des Umschaltelements (50) zu speichern.

7. Sensor (10) nach einem der vorhergehenden Ansprüche,
wobei die Steuer- und Auswertungseinheit (30) dafür ausgebildet ist, eine Vielzahl von Sendelichtsignalen (14) nacheinander auszusenden, Informationen über die jeweiligen remittierten oder reflektierten Lichtsignale (24) in einem Histogramm zu akkumulieren und das Histogramm auszuwerten, um die Lichtlaufzeit zu bestimmen.

8. Sensor (10) nach Anspruch 7,
wobei die Steuer- und Auswertungseinheit (30) dafür ausgebildet ist, das Umschaltelement (50) mindestens einmal zwischen den wiederholt ausgesandten Sendelichtsignalen (14) für die Bestimmung eines Werts für den Abstand umzuschalten.

9. Sensor (10) nach einem der vorhergehenden Ansprüche,
der als Laserscanner mit einer beweglichen Ablenkeinheit (34) zur periodischen Ablenkung der Sendelichtsignale (14) in den Überwachungsbereich (20) ausgebildet ist.

10. Sensor (10) nach Anspruch 9,
wobei die Steuer- und Auswertungseinheit (30) dafür ausgebildet ist, das Umschaltelement zwischen zwei Perioden der periodischen Ablenkung (34) umzuschalten.

11. Sensor (10) nach einem der vorhergehenden Ansprüche,
wobei die Steuer- und Auswertungseinheit (30) dafür ausgebildet ist, das Umschaltelement (50) zwischen zwei Bestimmungen eines Abstands umzuschalten.

12. Sensor (10) nach einem der vorhergehenden Ansprüche,
der einen Sicherheitsausgang (32) aufweist und wobei die Steuer- und Auswertungseinheit (30) dafür ausgebildet ist, unzulässige Eingriffe in Schutzfelder innerhalb des Überwachungsbereichs (22) zu erkennen und daraufhin ein sicherheitsgerichtetes Abschaltsignal an dem Sicherheitsausgang (32) auszugeben.

13. Verfahren zur Erfassung und Abstandsbestimmung von Objekten (22) in einem Überwachungsbereich (20), bei dem ein Sendelichtsignal (14) mit einem Lichtpuls in den Überwachungsbereich (20) ausgesandt, aus dem von Objekten (22) in dem Überwachungsbereich (20) remittierten oder reflektierten Lichtsignal (24) ein Empfangspuls erzeugt und zum Bestimmen des Abstands des Objekts (22) mit Hilfe eines pulsbasierten Lichtlaufzeitverfahrens ausgewertet wird, wobei der Empfangspuls in einem ersten Empfangspfad (44) einer Empfängerschaltung (28) eine Schwingung anregt und das Schwingungssignal einer Auswertung (30) zugeführt wird, um einen Empfangszeitpunkt zu bestimmen, **dadurch gekennzeichnet,**
**dass** die Empfängerschaltung (28) einen zweiten Empfangspfad (48) für ein direktes Auslesen aufweist, bei dem der Empfangspuls selbst ausgewertet wird, dessen Pulsform in dem zweiten Empfangspfad möglichst treu abgebildet wird, und dass durch Umschaltung eines Umschaltelements (50) der Empfangspuls wahlweise in dem ersten Empfangspfad (44) die Schwingung anregt oder mittels des zweiten Empfangspfades (48) direkt ausgelesen wird, um eine Wahlmöglichkeit zwischen der Auswertung des Schwingungssignals und des Empfangspulses selbst anzubieten, wobei sich die beiden Empfangspfade (44, 48) Leitungen und Komponenten teilen dürfen.

## Claims

1. An optoelectronic sensor (10) for detecting and determining the distance of objects (22) in a monitored area (20), the sensor (10) comprising a light transmitter (12) for transmitting a transmitted light signal (14) having a light pulse into the monitored area (20), a light receiver (26) for generating a reception pulse from the light signal (24) remitted or reflected by objects (22) in the monitored area (20), and a control and evaluation unit (30) for determining the distance of the object (22) based on the reception pulse and using a pulse-based time-of-flight method, wherein a receiver circuit (28) having a first receiving path (44) in which the reception pulse excites an oscillation is arranged downstream of the light receiver (26), wherein the control and evaluation unit (22) is configured to evaluate the oscillation signal that is generated by a reception pulse by means of the first receiving path in order to determine a reception point in time, **characterized in that** the receiver circuit (28) comprises a second receiving path (48) for direct readout, in which the receiving pulse itself, whose pulse shape is mapped as faithfully as possible in the second receiving path, is transferred to the control and evaluation unit (30), and a switching element (50) for switching between the two receiving paths (44, 48) in order to offer a choice between the evaluation of the oscillation signal and the receiving pulse itself, the two receiving paths (44, 48) being allowed to share lines and components.

2. The sensor (10) according to claim 1,
wherein the first receiving path comprises an oscillation filter (44), in particular an oscillating circuit.

3. The sensor (10) according to claim 1 or 2,
wherein the second receiving path comprises a shunt resistor (48).

4. The sensor (10) according to claim 2 and 3,
wherein the shunt resistor (48) and the oscillation filter (44) are connected in series and the shunt resistor (48) can either be bridged or not be bridged by means of the switching element (50).

5. The sensor (10) according to any of claims 1 to 3,
wherein the first receiving path (44) and the second receiving path (48) comprise partial branches parallel to one another, wherein a respective partial branch can be connected to the light receiver (26) by means of the switching element (50a-b).

6. The sensor (10) according to any of the preceding claims,
wherein the control and evaluation unit (30) is configured to store, together with a respective measured value for the distance, a mode information with the associated state of the switching element (50).

7. The sensor (10) according to any of the preceding claims,
wherein the control and evaluation unit (30) is configured to transmit a plurality of transmitted light signals (14) in succession, to accumulate information about the respective reflected or remitted light signals (24) in a histogram, and to evaluate the histogram to determine the light time of flight.

8. The sensor (10) according to claim 7,
wherein the control and evaluation unit (30) is configured to switch the switching element (50) at least once between the repeatedly transmitted light signals (14) for determining a value for the distance.

9. The sensor (10) according to any of the preceding claims,
which is configured as a laser scanner with a movable deflection unit (34) for periodically deflecting the transmitted light signals (14) into the monitoring area (20).

10. The sensor (10) according to claim 9,
wherein the control and evaluation unit (30) is configured to switch the switching element between two periods of periodic deflection (34).

11. The sensor (10) according to any of the preceding claims,
wherein the control and evaluation unit (30) is configured to switch the switching element (50) between two determinations of a distance.

12. The sensor (10) according to any of the preceding claims,
which has a safety output (32), and wherein the control and evaluation unit (30) is configured to detect inadmissible intrusions into protective fields within the monitoring area (22) and in that case to output a safety-related switch-off signal at the safety output (32).

13. A method for detecting and determining the distance of objects (22) in a monitored area (20), wherein a transmitted light signal (14) having a light pulse is transmitted into the monitored area (20), a reception pulse is generated from the light signal (24) reflected or remitted by objects (22) in the monitored area (20) and is evaluated for determining the distance of the object (22) using a pulse-based light time-of-flight method, wherein the reception pulse excites an oscillation in a first receiving path (44) of a receiver circuit (28) and the oscillation signal is fed to an evaluation (30) to determine a reception point in time, **characterized in that** the receiver circuit (28) has a second receiving path (48) for direct readout, in which the reception pulse itself is evaluated, the pulse shape of the reception pulse being mapped as faithfully as possible in the second receive path, and **in that**, by switching a switching element (50), the reception pulse either excites the oscillation in the first receiving path (44) or is read out directly by means of the second receiving path (48) in order to offer a choice between the evaluation of the oscillation signal and the reception pulse itself, the two receiving paths (44, 48) being allowed to share lines and components.

## Revendications

1. Capteur optoélectronique (10) pour détecter et déterminer la distance d'objets (22) dans une zone à surveiller (20), comprenant un émetteur de lumière (12) pour émettre un signal lumineux d'émission (14) avec une impulsion lumineuse dans la zone à surveiller (20), un récepteur de lumière (26) pour générer une impulsion de réception à partir du signal lumineux (24) réémis ou réfléchi par des objets (22) dans la zone à surveiller (20), et une unité de commande et d'évaluation (30) pour déterminer la distance de l'objet (22) à l'aide de l'impulsion de réception et d'un procédé de temps de parcours de lumière à base d'impulsions, le récepteur de lumière (26) étant suivi par un circuit de réception (28) ayant un premier chemin de réception (44) dans lequel l'impulsion de réception excite une oscillation, l'unité de commande et d'évaluation (22) étant réalisée pour évaluer le signal oscillant généré d'une impulsion de réception au moyen du premier chemin de réception, afin de déterminer un instant de réception,
**caractérisé en ce que**
le circuit de réception (28) présente un deuxième chemin de réception (48) pour une lecture directe, dans lequel l'impulsion de réception elle-même, dont la forme d'impulsion est reproduite aussi fidèlement que possible dans le deuxième chemin de réception, est transmise à l'unité de commande et d'évaluation (30), ainsi qu'un élément de commutation (50) pour la commutation entre les deux chemins de réception (44, 48), afin d'offrir un choix possible entre l'évaluation du signal oscillant et l'impulsion de réception elle-même, en permettant aux deux chemins de réception (44, 48) de partager des lignes et des composants.

2. Capteur (10) selon la revendication 1, dans lequel le premier chemin de réception comprend un filtre d'oscillation (44), en particulier un circuit résonnant.

3. Capteur (10) selon la revendication 1 ou 2, dans lequel le deuxième chemin de réception présente une résistance shunt (48).

4. Capteur (10) selon les revendications 2 et 3, dans lequel la résistance shunt (48) et le filtre d'oscillation (44) sont montés en série, et la résistance shunt (48) peut au choix être pontée ou non au moyen de l'élément de commutation (50).

5. Capteur (10) selon l'une des revendications 1 à 3, dans lequel le premier chemin de réception (44) et le deuxième chemin de réception (48) présentent des branches partielles parallèles entre elles, parmi lesquelles une branche partielle respective peut être connectée au récepteur de lumière (26) au moyen de l'élément de commutation (50a - b).

6. Capteur (10) selon l'une des revendications précédentes, dans lequel l'unité de commande et d'évaluation (30) est réalisée pour mémoriser une information de mode avec l'état associé de l'élément de commutation (50) à une valeur respective déterminée pour la distance.

7. Capteur (10) selon l'une des revendications précédentes, dans lequel l'unité de commande et d'évaluation (30) est réalisée pour émettre successivement une multitude de signaux lumineux d'émission (14), pour accumuler dans un histogramme des informations relatives aux signaux lumineux (24) respectifs réémis ou réfléchis, et pour évaluer l'histogramme, afin de déterminer le temps de parcours de lumière.

8. Capteur (10) selon la revendication 7, dans lequel l'unité de commande et d'évaluation (30) est réalisée pour commuter l'élément de commutation (50) au moins une fois entre les signaux lumineux d'émission (14) émis de manière répétée, afin de déterminer une valeur pour la distance.

9. Capteur (10) selon l'une des revendications précédentes, qui est réalisé sous forme de scanner laser ayant une unité de déviation mobile (34) pour dévier périodiquement les signaux lumineux d'émission (14) dans la zone à surveiller (20).

10. Capteur (10) selon la revendication 9, dans lequel l'unité de commande et d'évaluation (30) est réalisée pour commuter l'élément de commutation entre deux périodes de la déviation périodique (34).

11. Capteur (10) selon l'une des revendications précédentes, dans lequel l'unité de commande et d'évaluation (30) est réalisée pour commuter l'élément de commutation (50) entre deux déterminations d'une distance.

12. Capteur (10) selon l'une des revendications précédentes, qui présente une sortie de sécurité (32) et dans lequel l'unité de commande et d'évaluation (30) est réalisée pour reconnaître des interventions non autorisées dans des champs de protection à l'intérieur de la zone à surveiller (22) et pour émettre ensuite un signal de coupure sécurisé à la sortie de sécurité (32).

13. Procédé pour détecter et déterminer la distance d'objets (22) dans une zone à surveiller (20), dans lequel un signal lumineux d'émission (14) avec une impulsion lumineuse est émis dans la zone à surveiller (20), une impulsion de réception est générée à partir du signal lumineux (24) réémis ou réfléchi par des objets (22) dans la zone à surveiller (20) et est évaluée pour déterminer la distance de l'objet (22) à l'aide d'un procédé de temps de parcours de lumière à base d'impulsions, l'impulsion de réception excitant une oscillation dans un premier chemin de réception (44) d'un circuit de réception (28), et le signal oscillant étant amené à une évaluation (30), afin de déterminer un instant de réception,
**caractérisé en ce que**
le circuit de réception (28) présente un deuxième chemin de réception (48) pour une lecture directe, dans lequel l'impulsion de réception est évaluée elle-même, dont la forme d'impulsion est reproduite aussi fidèlement que possible dans le deuxième chemin de réception, et par commutation d'un élément de commutation (50) l'impulsion de réception excite au choix l'oscillation dans le premier chemin de réception (44) ou est lue directement au moyen du deuxième chemin de réception (48), afin d'offrir un choix possible entre l'évaluation du signal oscillant et l'impulsion de réception elle-même, en permettant aux deux chemins de réception (44, 48) de partager des lignes et des composants.
